# EUROPÄISCHE PATENTSCHRIFT

(11) **EP 0 347 829 B1**
(45) Veröffentlichungstag und Bekanntmachung des Hinweises auf die Patenterteilung: **07.09.1994**
(21) Anmeldenummer: 89111170.0
(22) Anmeldetag: 20.06.1989
(51) Int. Cl.: D04H 1/44, D04H 1/42, A41D 13/12

(54) **Faservlieskomposit und Verfahren zum Herstellen eines solchen Vlieses**
Composite fibre web and method for making it
Nappe de fibres composite, et procédé pour la fabriquer

(30) Priorität: 21.06.1988 JP 152985/88
(43) Veröffentlichungstag der Anmeldung: 27.12.1989
(73) Patentinhaber: UNI-CHARM CORPORATION, Kawanoe-shi Ehime-ken (JP)
(72) Erfinder: Nozaki, Satoshi, Uma-gun Ehime-ken (JP); Imai, Shigeo, Iyomishima-shi Ehime-Ken (JP); Ishigami, Makoto, Tokyo (JP); Tomida, Katsushi, Kanonji-shi Kagawa-ken (JP)
(74) Vertreter: Sperling, Rüdiger, Dipl.-Ing.

(56) Entgegenhaltungen:
- EP-A- 0 108 621
- EP-A- 0 257 427
- US-A- 3 747 161

## Beschreibung

Die vorliegende Erfindung betrifft ein Faservlieskomposit mit hoher Formstabilität, insbesondere bezüglich der Abmessungen und ein verfahren zum Herstellen eines solchen Vlieses.

Aus der US-A 4 442 161 ist ein aus Holzpulpe und Polyester bestehendes Vlies bekannt, das aus einer Lage Holzpulpe und einer Lage Polyester zusammengesetzt ist. Die Lagen werden mittels eines Wasserstrahlverfahrens ineinander vernetzt und anschließend einer weiteren Wasserstrahlbehandlung unterzogen, die dazu dienen soll, die Flüssigkeitssperreigenschaften zu verbessern. Diese weitere Wasserstrahlbehandlung erfolgt unter einer Düsenanordnung, bei der mindestens 31,5 (80) Düsen pro cm (inch) vorgesehen sind. Diese Behandlung mag die Wasserdurchgangseigenschaften im Sinne einer besseren Dichtheit verbessern, hat jedoch keine Einwirkung auf die Geschmeidigkeit des Endprodukts.

Aus der US 3 747 161 ist ein Verfahren zum Herstellen eines Faservlieses im Wirrverfahren bekannt, mit einer Lage faserigen, nicht gewebten Materials, in dem Öffnungen oder Löcher oder andere Bereiche, z.B. mit geringer Faserdichte enthalten sind. Das Verfahren beinhaltet Schritte des Behandelns der faserigen Lage mittels Fluidstrahlen, die auf die Lage gerichtet sind, während es auf einer Unterlage aufliegt, dehnen der auf diese Weise behandelten Lage in ihre Querrichtung und Behandeln der gedehnten Lage mit einer Vielzahl von Wasserstrahlen, wobei diese Lage mit einem Muster von Faserbündeln versehen wird. Dieses Muster definiert Öffnungen oder Löcher oder andere Bereiche geringerer Faserdichte.

Übliche Faservliese, die mittels Wasserstrahlbehandlung einer aus Kurzfasern bestehenden Bahn, z.B. ein "spunlaced" Vlies sind in dem Sinne nachteilig, daß ein signifikanter Unterschied Zwischen den Kette und Schuß-Zugfestigkeiten besteht und dieser Nachteil begrenzt deren Anwendungsgebiete dieser Vliese. Um dieses Problem zu lösen wurde bereits ein Verfahren zum Verbessern solcher unterschiedlicher Zugfestigkeiten vorgeschlagen, gemäß welchem, nach einer Kreuzdehnbehandlung die so behandelte Bahn durch erneute Wasserstrahlbehandlung fixiert wird, weitere Behandlungsmöglichkeiten bestehen in der Verwendung eines geeigneten Binders oder in einer Wärmebehandlung, die die Fasern miteinander verschmelzt, wie beispielsweise in der japanischen Patentanmeldung Nr. 49-42970.

Es wurde jedoch herausgefunden, daß die Verwendung eines Binders und das Befestigen der Fasern durch Verschmelzen oder Verschweißen die Geschmeidigkeit und das angenehme Griff- Berührgefühl des Faservlieses beeinträchtigt, das durch die Wasserstrahlbehandlung erzielt wird.

Auf der anderen Seite verbessert die Behandlung eines Faservlieses mit Wasserstrahlen nach der Kreuzdehnung das Festigkeitsverhältnis Querrichtung/Maschinenrichtung durch die Faserverschlingungsbehandlung nur durch primäre Wasserstrahlen, jedoch konnte das Verhältnis der ursprünglichen Zugfestigkeit in beiden Richtungen bezüglich der gewünschten Formstabilität in Quer- und in Längsrichtung des Faservlieses durch dieses Verfahren nicht adäquat verbessert werden. Ein solches Problem tritt beispielsweise als ein Phänomen auf, da eine Zugspannung in Maschinenrichtung leicht eine Änderung in der Dimension in Querrichtung (ein Schrumpfen) hervorruft und eine Zugspannung in Querrichtung verursacht in Maschinenrichtung eine Veränderung in der Dimension (ein Schrumpfen).

Der Erfindung liegt die Aufgabe zugrunde, ein Kompositfaservlies bereitzustellen, das stabil in den Abmessungen ist und hervorragende Eigenschaften hinsichtlich der Geschmeidigkeit aufweist.

### Zusammenfassung der Erfindung.

Die Aufgabe wird erfindungsgemäß bei einem Kompositfaservlies, mit einem Faservliessubstrat, auf dem und in dem erste und zweite Kurzfasern unter der Einwirkung eines Fluids miteinander verschlungen sind, dadurch gelöst, daß das Substrat aus einem in Querrichtung annähernd 20 bis 200% gedehntem faserverschlungenem Vlies besteht, und daß die Spuren der Fluidstrahlen, die auf einer Lage des Vlieses geformt sind, die vorherrschend aus zweiten Kurzfasern besteht, einen engeren Abstand voneinander aufweisen als die Spuren der Fluidstrahlen, die auf einer Lage des Vlieses gebildet sind, das vorherrschend erste Kurzfasern aufweist.

Die vorliegende Erfindung umfaßt ebenfalls ein Verfahren zu Herstellen des Kompositfaservlieses mit folgenden Verfahrensschritten:
- Behandeln einer Faserbahn bestehend aus ersten Kurzfasern mit einem Wasserstrahl auf einer Unterlage um ein Wirrfaservliessubstrat zu erhalten;
- Querdehnen des Substrats um etwa 20 bis 200%;
- Einbringen zweiter Kurzfasern in Form einer Lage oder als Brei auf das quer gedehnte Substrat;
- Behandeln des lamellaren Materials, bestehend aus dem quer gedehnten Substrat und den zweiten, darauf plazierten Kurzfasern mit Wasserstrahlen bei einer Geschwindigkeit von 40m/Sek. oder höher und bei einem Druck von mindestens ca. 1,0 M Pa (10kg/cm²) auf die zweiten Kurzfasern von oben, wobei die Wasserstrahlen einen engeren Abstand voneinander aufweisen, als die Spure die von den Wasserstrahlen auf dem gedehnten Substrat während des zweiten Schritts hinterlassen worden sind, wobei die Behandlung auf einer Unterlage mit einer netzartigen Struktur oder einer perforierten Platte mit einem Öffnungsverhältnis von 2,5 bis 50% durchgeführt wird, um die zweiten Kurzfasern in die Fasern des quer gedehnten Substrats zu verschlingen und zu verfilzen und dabei Zwischenräume in den Substratfasern zu füllen.

Das erfindungsgemäß hergestellte Kompositfaservlies besitzt eine hohe dimensionale Stabilität, da die ursprüngliche Zugfestigkeit hoch genug ist, jeder signifikaten Dehnung zu widerstehen und weist auch excellente Eigenschaften hinsichtlich der Geschmeidigkeit wie auch im Griffgefühl auf. Daher ist das erfindungsgemäße Kompositfaservlies gut verwendbar als Ausgangsmaterial für Wegwerftücher und Wäsche, insbesondere auch für den Gebrauch auf dem medizinischen Gebiet, z.B. für Kleider, Vorhänge, Überwürfe und Bettücher in Operationsräumen.

### Kurzbeschreibung der Figuren.

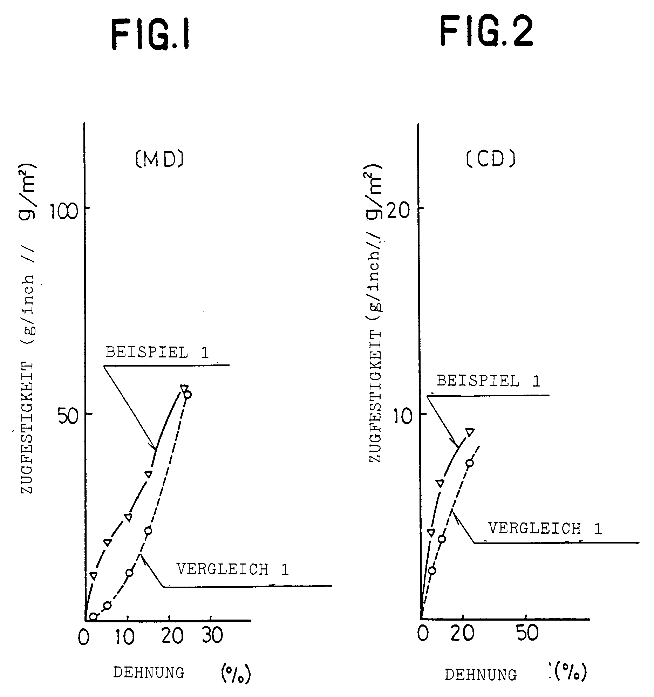

Die Figuren 1 und 2 zeigen graphische Diagramme betreffend der Korrelation der Zugfestigkeit und der Dehnung in Maschinenrichtung (MD) und Querrichtung (CD) von Faservliesen bezüglich eines ersten Ausführungsbeispiels und eines Vergleichsbeispiels.

### Bevorzugtes Ausführungsbeispiel der Erfindung.

Im folgenden wird die Erfindung anhand eines Ausführungsbeispiels unter Bezugnahme auf die begleitenden Figuren näher beschrieben.

Das Kompositfaservlies der vorliegenden Erfindung wird mittels eines Verfahrens hergestellt, das folgende Verfahrensschritte beinhaltet: Querdehnen eines Vlieses, bestehend aus ersten Kurzfasern, die einer ersten Verschlingungsbehandlung mittels Wasserstrahlen ausgesetzt waren, anschließend Auflegen zweiter Kurzfasern auf das quer gedehnte Faservlies und Aussetzen dieses Lamellarmaterials einer zweiten Faserverschlingungsbehandlung mittels Wasserstrahlen.

Eine Faserbahn, wie beispielsweise ein Faserflor, das aus ersten Kurzfasern besteht, wird einer Faserverschlingungsbehandlung durch Wasserstrahlen in der bekannten Weise ausgesetzt, beispielsweise wie in der US-Patentschrift 3 508 308 beschrieben, um das gewünschte Anfangsvlies zu erhalten. Dieses Anfangsvlies wird etwa zu 20 bis 200% bezüglich der ursprünglichen Breite in Querrichtung gestreckt, um ein Faservliessubstrat zu bilden, dessen Maschinenrichtung/Querrichtung Festigkeitsverhältnisverbessert ist. Das Querdehnungsverhältnis liegt vorzugsweise bei etwa 20 bis 100%. Um eine absolute Festigkeit des Substrats zu verbessern, weisen die ersten Kurzfasern vorzugsweise eine Faserlänge von 20 bis 130 mm und eine Feinheit von 0,778 bis 6,667 dtex (0,7 bis 6d) auf, sie sind vorzugsweise aus der Gruppe: Polyesterfasern, Acrylfasern, Nylonfasern und Polyolefinfasern ausgewählt. Insbesondere ist es bevorzugt, Polyesterfasern alleine zu verwenden. Für die Querdehnungsbehandlung können Querdehnungsmitteln bekannter Art, wie beispielsweise ein Streckrahmen verwendet werden. Die Querdehnungsbehandlung erhöht die innere Bindung des Substrats, wodurch die Anfangszugfestigkeit verbessert wird. Dies hat zur Folge, daß jegliche signifikante Dehnung, die die dimensionale Stabilität schädigen könnte, unterdrückt wird, wenn das Substrat erst einmal im vorbestimmten Verhältnis quergedehnt ist.

Die zweiten, auf das Faservliessubstrat aufgebrachten Kurzfasern umfassen vorzugsweise Fasern mit einer Faserlänge von etwa 25 mm oder weniger, am meisten bevorzugt zwischen 2 bis 5 mm, und zwar deshalb, weil diese zweiten Kurzfasern hauptsächlich dazu bestimmt sind, mit dem Substrat kombiniert zu werden und dabei in entsprechender Weise die Freistellen und lockeren Abschnitte auszufüllen, die in dem Substrat als Ergebnis der Querdehnung auftreten. Die zweiten Kurzfasern werden auf das Substrat vorzugsweise in ungeordneter Orientierung der Fasern aufgebracht, beispielsweise in Form einer Lage oder eines Breis. Die Auswahl der zweiten Kurzfasern ist nicht kritisch. Praktisch kann jede der nachfolgend aufgeführten Materialien oder eine Kombination daraus für die zweiten Kurzfasern verwendet werden; die Auswahl hängt ab von dem besonderen Anwendungsgebiet des Erzeugnisses. Als Materialien können verwendet werden Polyester, Polyacryl, Polyolefin, Nylon, Zellulose (incl. Rayon) und ähnliche Materialien. Es sollte vermerkt werden, daß Fasern mit einem besonderen Querschnitt, wie beispielsweise ein flacher Querschnitt, bevorzugt werden, da solche besonderen Querschnitte das Herausgleiten der zweiten Kurzfasern aus dem Substrat verhindern und die Verschlingung erleichtern.

Insbesondere Holzpulpefasern oder andere Zellulose-Pulpefasern in Form einer Lage oder eines Breis werden auf das Substrat als Einzellage oder mehrlagig aufgebracht. Nach dem Aufbringen der zweiten Kurzfasern auf das Substrat wird dieses lamellare Material wieder einer Faserverschlingungsbehandlung durch Wasserstrahlen ausgesetzt, um die beiden Komponenten miteinander zu kombinieren. Vorzugsweise bogenartige Pulpefasern, wie Tissuepapier und sogenannte Pulpelagen, die üblicherweise zur Papierherstellung verwendet werden, werden auch hier verwendet; sie haben ein gewünschtes Basisgewicht und können leicht durch die Wasserstrahlen aufgelöst und gelockert werden.

Insbesondere wenn das erfindungsgemäße Kompositvlies als Material für die Ausstattung von Operationsräumen verwendet wird, beispielsweise für die Kleidung, Vorhänge, Abdeckungen und Bettwäsche, dann ist es günstig, Pulpefasern und synthetische Fasern vorher zu mischen und dann auf das Substrat aufzubringen, oder es können die beiden Fasertypen auf dem Substrat zusammen gemischt werden, um ein angenehmes Griffgefühl und eine angenehme Weichheit zu erzielen, statt die Pulpefasern allein als zweite Kurzfasern auf das Substrat aufzubringen.

Die am meisten bevorzugte Komposition eines solchen Faservlieses besteht aus einem Substrat mit einem Grundgewicht von mindestens 20 g/m², die zweiten Kurzfasern umfassen 30 bis 90 Gewichtsprozent der synthetischen Fasern, zum Beispiel Polyesterfasern mit einer Faserlänge von 3 bis 5 mm und einer Feinheit von 0,11 bis 3,33 dtex (0,1 bis 3d) und 10 bis 70 Gewichtsprozent der Pulpefasern, so daß Faservlies insgesamt ein Grundgewicht von 25 bis 100 g/m² besitzt. Ein deratiges Vlies ist für die oben erwähnte Anwendung z.B. als Operationsbekleidung auch deswegen vorteilhaft, weil ein solches Faservlies eine hohe Wasserfestigkeit, Fluidsperreigenschaften und Atemfähigkeit aufweist.

Um die Anfangszugfestigkeit sowohl in Maschinenrichtung (MD), als auch in Querrichtung (CD) zu verbessern und ein Faservlies mit hoher Stabilität hinsichtlich der Abmessungen bereitzustellen ist, ein Gewichtsverhältnis der zweiten Kurzfasern bezüglich der ersten Kurzfasern von ca. 1:4 vorteilhaft.

Es ist zum Beispiel günstig, ein quergedehntes Vlies mit einem Grundgewicht von 40 g/m² mit einer lagenartigen Faserpulpe mit einem Basisgewicht von zumindest 10 g/m² zu kombinieren.

Zur Faserverschlingungsbehandlung mittels zweiter Wasserstrahlen kann ein Faserverschlingungsverfahren aus dem Stand der Technik, z.B. aus der US-PS 3 485 706 verwendet werden. Als Ergebnis der ersten Wasserstrahlbehandlung zum Zwecke des Faserverschlingens sind während der Faserverschlingung mit einem relativ hohen Verschlingungsgrad eine Vielzahl von kontinuierlichen Linien (Düsenspuren) in dem Faservlies ausgebildet; diese Linien oder Spuren weisen einen Abstand voneinander auf, der dem Abstand der Düsenöffnungen entspricht, die den Hochdruckstrahlen angepaßt sind. Dieser Abstand zwischen den Strahlspuren wird als Ergebnis der nachfolgenden Querdehnungsbehandlung zum Zwecke des Anfangsvlieses vergrößert und die zuvor erwähnten Öffnungen und losen Bereiche erscheinen hauptsächlich in den Regionen, die zwischen einem Paar benachbarter Strahlspuren definiert sind.

Um die zweiten Kurzfasern mit dem Anfangsfaservlies zu kombinieren und dabei die genannten Bereiche mit den zweiten Kurzfasern auszufüllen, werden die zweiten Düsenstrahlen zur Faserverschlingungsbehandlung, die vorzugsweise mit hohem Druck aus den Öffnungen austreten, in einem kürzeren Abstand voneinander angeordnet als der Abstand zwischen jedem Paar benachbarter Strahlspuren, die in dem quer gedehnten Faservlies, das als Start oder Anfangsfaservlies bezeichnet ist, ausgebildet sind.

Im einzelnen erfolgt die Faserverschlingungsbehandlung durch Verwendung zweiter Wasserstrahlen wie folgt:
Zweite Kurzfasern in Form einer Lage oder eines Breies werden auf das quer gedehnte Faservliessubstrat aufgelegt und dann Wasserstrahlen von oben auf die zweiten Kurzfasern mit einer Geschwindigkeit von 40 m/sec oder höher und einem Druck von zumindest ca. 1,0 M Pa (10 kg/cm²) auf einer Unterlage, die eine netzartige Auflage von weniger als 60 Maschen oder eine perforierte Platte mit einem Öffnungsverhältnis von 2,5 bis 50% aufweist, aufgestrahlt. Diese lamellare Faserlage kann durch unter der Platte angeordnete Saugmittel entwässert werden. Die Saugdrainage ist sehr wirksam, um das unerwünschte Phänomen zu vermeiden, daß die zweiten Kurzfasern in sich stauendem Wasser auf dem Substrat aufschwimmen und den Füllwirkungsgrad dabei verschlechtert. In den Düsenmitteln, die in Querrichtung zu dem lamellaren, aus dem Substrat und den zweiten Kurzfasern bestehenden Material angeordnet sind, werden vorzugsweise Öffnungen verwendet mit einem Durchmesser von 0,05 bis 0,25 mm und einem Abstand von weniger als 1 mm, vorzugsweise einem Abstand von 0,25 bis 0,7 mm. Derartige Durchmesser und Abstände sind bevorzugt im Hinblick auf die Wirkung, mit welchem das Substrat mit zweiten Kurzfasern gefüllt wird.

Das auf diese Weise hergestellte erfindungsgemäße Faservlieskomposit erhält nun ihre hauptsächlich zwischen jedem Paar einander gegenüberliegender Düsenstrahlen definierten Regionen mit zweiten Kurzfasern gefüllt und verschlungen, so daß die Öffnungen und losen Bereiche wirkungsvoll verstärkt werden. Dies hat zur Folge, daß die Spuren der Düsenstrahlen, die auf einer Lage gebildet sind, die hauptsächlich zweite Kurzfasern in Abständen enthält, enger sind, als die Abstände zwischen den Spuren der Düsenstrahlen, die auf eine Lage mit vorherrschend ersten Kurzfasern dieses Faservlieskomposits ausgebildet sind. Das erfindungsgemäße Faservlies zeigt im Diagramm, daß eine Korrelation zwischen der Dehn- und der Zugfestigkeit widergibt, eine steil ansteigende S-Kurve. Diese steile S-Kurve erscheint nicht nur in der MD-Richtung, sondern ebenfalls in der CD-Richtung. Wie aus dem Diagramm hervorgeht, besitzt das Faservlieskomposit die erforderliche Eigenschaft für die dimensionale Stabilität, d.h. die Anfangszugfestigkeit ist genügend hoch, um jede signifikante Dehnung zu unterdrücken.

Es sei darauf hingewiesen, daß dieses Faservlieskomposit mit jedem bekannten Repellent behandelt und jeder bekannten Weichmacherbehandlung unterzogen werden kann, falls dies gewünscht wird.

Weitere Vorteile der Erfindung werden im Zusammenhang mit den Vergleichen von Ausführungsbeispielen mit entsprechenden Vergleichsbeispielen beschrieben.

### Vergleich 1

Eine kardierte Bahn mit 100% Polyesterfaser 1,55 dtex x 44 mm wurde einer ersten Verschlingungsbehandlung mittels Säulenwasserstrahlen bei einem Druck von 50 kg/cm² unterzogen, um ein Anfangsvlies von 40 g/m² zu erhalten. Nach dem Querdehnen um ca. 30% wurde das Faservlies einer zweiten Faserverschlingungsbehandlung mittels Fluid bei einem Druck von ca. 5,0 M Pa (50 kg/cm²) unterzogen. Bei der ersten Faserverschlingungsbehandlung wurden Öffnungen mit einem Öffnungsdurchmesser von 0,13 mm und einem Abstand von 1 mm verwendet, bei der zweiten Faserverschlingungsbehandlung wurden Öffnungen mit einem Durchmesser von 0,92mm und einem Abstand von 0,5 mm verwendet.

### Beispiel 1 gemäß der Erfindung.

Zwei papierartige Pulpenfaserlagen, die jeweils 21 g/m² wiegen und die aufeinandergelegt sind, werden auf ein Ausgangsfaservlies mit einem Gewicht von 40 g/m² gelegt, das in der gleichen Weise wie beim ersten Beispiel erhalten worden ist, und dann etwa 30 % quergedehnt wird. Anschließend werden säulenartige Wasserstrahlen mit einem Druck von 50 kg/cm² wie im Vergleichsbeispiel 1 von oben auf die Pulpenfaserlagen gespritzt, um die zweite Faserverschlingungsbehandlung durchzuführen. Der Öffnungsdurchmesser und der Öffnungsabstand der ersten und zweiten Faserverschlingungsbehandlungen sind jeweils dieselben wie beim Vergleichsbeispiel 1. Die Dehn/Zugfestigkeitskorrelation sowohl in MD als auch CD-Richtung für das Faservlies des Vergleichsbeispiels 1 und das Beispiel 1 wurden jeweils ermittelt und in Fig. 1 und 2 jeweils durch durchgehende bzw. unterbrochene Linien dargestellt.

In Erfindungsbeispiel 1 und in dem Vergleichsbeispiel 1 wurde die Anzahl der Schritte zur zweiten Faserverschlingungsbehandlung, d.h. der Betrag der aufgebrachten Fluidenergie vergrößert und die Eigenschaften des dadurch erhaltenen Faservlieses bestimmt. Die Bestimmung zeigte keinen Unterschied in der Korrelation zwischen der Dehnung/Zugfestigkeit.

### Beispiel 2 gemäß der Erfindung

Eine kardierte Lage mit 100 % Poylesterfasern 1,55 dtex (1,4d) x 44 mm wurde einer ersten Faserverschlingungsbehandlung durch säulenförmige Wasserstrahlen bei einem Druck von ca. 5,0 M Pa (50 kg/cm²) ausgesetzt, um ein Faservlies mit 52 g/m² zu erhalten. Nach einer Querdehnung von etwa 30% wurde eine papierartige Pulpenfaserlage mit 20 g/m² auf dieses Faservlies aufgelegt und einer zweiten Faserverschlingungsbehandlung durch säulenartige Wasserstrahlen bei einem Druck von ca, 5,0 M Pa (50 kg/cm²) ausgesetzt, um ein Faservlies mit einem Gewicht von ca. 60 g/m² zu erhalten. Der Düsendurchmesser und der Düsenabstand waren jeweils bei der ersten und der zweiten Faserverschlingungsbehandlung die gleichen Maße wie beim Beispiel 1.

### Vergleichsbeispiel 2

Eine kardierte Lage mit 100% Polyesterfasern von 1,556 dtex (1,4d) x 44 mm wurde einer Faserverschlingungsbehandlung mit säulenartigen Wasserstrahlen bei einem Druck von ca. 5,0 M Pa (50 kg/cm²) ausgesetzt, um ein Faservlies mit einem Gewicht von 80 g/m² zu erhalten. Nach einer Querdehnung von ungefähr 30% wurde dieses Faservlies erneut einer Faserverschlingungsbehandlung durch säulenartige Wasserstrahlung bei einem Druck von ca. 5,0 M Pa (50 kg/cm²) ausgesetzt, um ein Faservlies mit einem Gewicht von etwa 60 g/m² zu erhalten.

Die Dehnungs/Zugfestigkeitskorrelation sowohl in MD als auch in CD-Richtung wurden jeweils für das Beispiel 2 und das Vergleichsbeispiel 2 bestimmt und in die Tabelle eingetragen.

Die Tabelle 2 zeigt die dimensionalen CD/MD-Änderungen (Reduzierungsverhältnis), das aufgrund des MD/CD-Zugs auftritt, in Abhängigkeit vom Wechsel des Gewichtsverhältnisses der ersten und zweiten Fasern . Zur Bestimmung der dimensionalen Änderungen, wurde jedes Faservliessample mit einer Standardabmessung (200 x 50 mm) in Maschinenrichtung bei einer Belastung von 2 kg und in Querrichtung mit einer Belastung von 250 g gedehnt und die Verringerungsverhältnisse hinsichtlich der Abmessungen sowohl in der CD, als auch in der MD-Richtung bestimmt.

**Tabelle 1**

| | MD Festigkeit (g/inch) | | | | | CD Festigkeit (g/inch) | | | | |
|---|---|---|---|---|---|---|---|---|---|---|
| Dehnung (%) | 2 | 5 | 10 | 15 | *MAX | 5 | 10 | 25 | 50 | *MAX |
| Beispiel 2 | 259 | 909 | 2351 | 4314 | 11615 | 191 | 377 | 774 | 2061 | 3305 |
| Vergleich 2 | 113 | 194 | 345 | 533 | 8830 | 71 | 126 | 284 | 1040 | 3473 |
| *MAX bezeichnet eine Festigkeit zum Zeitpunkt des Bruchs | | | | | | | | | | |

**Tabelle 2**

| Gewichtsverhältnis | | Abmessungsverminderung (%) | |
|---|---|---|---|
| 1. Fasern | 2. Fasern | I | II |
| 100 | 133 | 0 | 0 |
| 100 | 31 | 6 | 0 |
| 100 | 27 | 6 | 0 |
| 100 | 25 | 18 | 2 |
| 100 | 10 | 54 | 39 |
| 100 | 0 | 58 | 48 |
| I: Verminderung der Abmessung in Querrichtung bei Zug in Maschinenrichtung II: Verminderung der Abmessung in Maschinenrichtung bei Dehnung in Querrichtung. | | | |

## Patentansprüche

1. Faservlieskomposit mit einem aus ersten Kurzfasern bestehenden Substrat und auf und in diesem unter dem Einwirken eines Fluids verschlungenen zweiten Fasern, dadurch **gekennzeichnet,** daß das Substrat aus einem in Querrichtung um 20% bis 200% gedehnten, faserverschlungenen Vlies besteht und daß Spuren von Fluidstrahlen auf einer Lage aus vorherrschend zweiten Fasern gebildeten Vlieses ausgebildet sind, die einen engeren Abstand voneinander aufweisen als die Fluidstrahlen, die auf einer Lage eines aus vorherrschend ersten Fasern gebildeten Vlieses ausgeformt sind.

2. Vlies nach Anspruch 1, dadurch **gekennzeichnet,** daß das Gewichtsverhältnis der zweiten Kurzfasern bezüglich der ersten Kurzfasern mindestens 1 : 4 beträgt.

3. Vlies nach Anspruch 1, dadurch **gekennzeichnet,** daß die ersten Kurzfasern eine Faserlänge von 20 bis 130 mm und einen Feinheitsgrad von 0,778 bis 6,667 dtex (0,7 bis 6 den) aufweisen.

4. Vlies nach mindestens einem der Ansprüche 1 bis 3, dadurch **gekennzeichnet,** daß die zweiten Kurzfasern eine Faserlänge von weniger als 25 mm und eine Feinheit von weniger als 3,33 dtex (3den) aufweisen.

5. Vlies nach mindestens einem der Ansprüche 1 bis 4, dadurch **gekennzeichnet,** daß die ersten Kurzfasern Polyesterfasern sind.

6. Vlies nach mindestens einem der Ansprüche 1 bis 5, dadurch **gekennzeichnet,** daß die zweiten Kurzfasern aus Pulpefasern oder Synthetikfasern oder einer beliebigen Kombination daraus bestehen.

7. Kleidung oder Vorhänge für den Gebrauch in einem Operationssaal, hergestellt aus dem Faservlieskomposit nach mindestens einem der Ansprüche 1 bis 6, dadurch **gekennzeichnet,** daß die zweiten Kurzfasern zumindest Pulpefasern aufweisen.

8. Kleidung oder Vorhang nach Anspruch 7, dadurch **gekennzeichnet,** daß die zweiten Kurzfasern aus einer Mischung von 10 bis 70 Gewichtsprozent Pulpefasern und 30 bis 90 Gewichtsprozent synthetische Fasern mit einer Feinheit von 0,11 bis 3,33 dtex (0,1 bis 3den) bestehen.

9. Bekleidung oder Vorhang nach Anspruch 7 oder 8, dadurch **gekennzeichnet,** daß das Fasersubstrat aus den ersten Kurzfasern ein Grundgewicht von 20 g/m² und ein Lamellarmaterial mit den zweiten Kurzfasern eingeschlossen, ein Grundgewicht von 25 bis 100 g/m² besitzt.

10. Verfahren zum Herstellen eines Faservlieskomposits auf einer Auflage, **gekennzeichnet** durch die folgenden Verfahrensschritte:
- Behandeln einer faserigen Lage mit ersten Kurzfasern mit Wasserstrahlen auf einer Unterlage, um ein Wirr-Faservliessubstrat zu erhalten;
- Querdehnen des Substrats auf ungefähr 20 bis 200%;
- Auflegen von zweiten Kurzfasern in Form einer Lage oder eines Breis auf das quergedehnte Substrat;
- Behandeln des Lamellarmaterials bestehend aus dem quergedehnten Substrat und den darauf gelegten zweiten Kurzfasern mit Wasserstrahlen bei einer Geschwindigkeit von 40 m/sec. und höher unter einem Druck von zumindest ca. 1,0 M Pa (10 kg/cm²) auf die zweiten Kurzfasern von oben, wobei die Wasserstrahlen einen engeren Abstand voneinader haben als die Spuren der Wasserstrahlen, die auf dem gedehnten Substrat beim zweiten Verfahrensschritt ausgebildet worden sind und die Auflage eine netzartige oder perforierte Plattenauflage mit einem Öffnungsverhältnis von 2,5 bis 50% ist, so daß die zweiten Kurzfasern sich in die Fasern des guergedehnten Substrats verschlingen und verfilzen und dabei die Zwischenräume der Substratfasern ausfüllen.

11. Verfahren nach Anspruch 10, dadurch **gekennzeichnet,** daß die beim vierten Verfahrensschritt verwendeten Öffnungen einen Durchmesser zwischen 0,05 und 0,25 mm aufweisen und in einem engeren Abstand zueinander angeordnet sind, als die Strahlspuren, die auf dem quergedehnten Substrat ausgebildet sind, vorzugsweise mit einem Abstand von weniger als 1 mm.

## Claims

1. Composite fibre web with a substrate comprising primary short fibres and secondary fibres interlaced upon and among said primary fibres under the action of a fluid, characterised in that the substrate comprises an interlaced-fibre web stretched in the transverse direction by 20% to 200%, and in that traces of fluid jets are formed on a layer of web formed predominantly from secondary fibres, which are at a lesser distance apart than the fluid jets which are formed on a layer of web predominantly formed from primary fibres.

2. Web according to claim 1, characterised in that the ratio of weight of the secondary fibres to primary fibres is at least 1 : 4.

3. Web according to claim 1, characterised in that the primary short fibres have a fibre length of 20 to 130 mm and a yarn count of 0.778 to 6.667 dtex (0.7 to 6 den).

4. Web according to at least one of claims 1 to 3, characterised in that the secondary short fibres have a fibre length of less than 25 mm and a yarn count of less than 3.33 dtex (3den).

5. Web according to at least one of claims 1 to 4, characterised in that the primary short fibres are polyester fibres.

6. Web according to at least one of claims 1 to 5, characterised in that the secondary short fibres are made from pulp fibres or synthetic fibres or any combination thereof.

7. Clothing or curtains for use in an operating theatre, manufactured from the composite fibre web according to at least one of claims 1 to 6, characterised in that the secondary short fibres at least contain pulp fibres.

8. Clothing or curtain according to claim 7, characterised in that the secondary short fibres comprise a mixture of 10 to 20 per cent by weight of pulp fibres and 30 to 90 per cent by weight of synthetic fibres with a yarn count of 0.11 to 3.33 dtex (0.1 to 3den).

9. Clothing or curtain according to claim 7 or 8, characterised in that the fibre substrate comprising the primary short fibres has a basic weight of 20 g/m², and a laminar material enclosing the secondary short fibres has a basic weight of 25 to 100 g/m².

10. Method of manufacturing a composite fibre web on a support, characterised by the following process steps:
- Treatment of a fibrous layer with primary short fibres by water jets on a base, in order to obtain a randomly-oriented fibre web substrate;
- Transverse stretching of the substrate to approximately 20 to 200%;
- Application of secondary short fibres in the form of a layer or of a paste to the transversely-stretched substrate;
- Treatment of the laminar material comprising the transversely-stretched substrate and the secondary short fibres applied thereon with water jets at a velocity of 40 m/sec. and above at a pressure of at least approximately 1.0 M Pa (10 kg/cm²) on to the secondary short fibres from above, the water jets being at a shorter distance apart than the traces of the water jets which were formed on the stretched substrate during the second process step, and the applied layer is a net-like or perforated laminar layer with an aperture ratio of 2.5 to 50%, so that the secondary short fibres interlace and mat together in the fibres of the transversely-stretched substrate, thereby filling up the intermediate spaces between the substrate fibres.

11. Method according to claim 10, characterised in that the openings used during the fourth process step have a diameter of between 0.05 and 0.25 mm and are at a closer spacing than the traces of the jets formed on the transversely-stretched substrate, preferably at a spacing of less than 1 mm.

## Revendications

1. Non tissé composite comportant un substrat composé de courtes fibres primaires, et de fibres secondaires entrelacées sur et dans ce substrat sous l'action d'un fluide, caractérisé en ce que le substrat est constitué par un non-tissé à fibres entrelacées, soumis à un étirement de 20 à 200 % dans le sens transversal, et en ce que des empreintes de jets de fluide sont produites dans une couche de non-tissé principalement composée de fibres secondaires, lesquelles empreintes présentent entre elles un écartement plus petit que celles laissées par des jets de fluide dans une couche de non-tissé principalement composée de fibres primaires.

2. Non-tissé selon la revendication 1, caractérisé en ce que le rapport pondéral entre les fibres courtes secondaires et les fibres courtes primaires est d'au moins 1 : 4.

3. Non-tissé selon la revendication 1, caractérisé en ce que les fibres courtes primaires présentent une longueur de 20 à 130 mm et un degré de finesse de 0,778 à 6,667 dtex (0,7 à 6 den).

4. Non-tissé selon au moins l'une des revendications 1 à 3, caractérisé en ce que les fibres courtes secondaires présentent une longueur de moins de 25 mm, et une finesse de moins de 3,33 dtex (3 den).

5. Non-tissé selon au moins l'une des revendications 1 à 4, caractérisé en ce que les fibres courtes primaires sont des fibres de polyester.

6. Non-tissé selon au moins l'une des revendications 1 à 5, caractérisé en ce que les fibres courtes secondaires consistent en des fibres de pâte ou en des fibres synthétiques, ou en une combinaison quelconque de ces fibres.

7. Vêtement ou rideau destiné à être utilisé dans une salle d'opérations, fabriqué à partir d'un non-tissé composite selon au moins l'une des revendications 1 à 6, caractérisé en ce que les fibres courtes secondaires présentent au moins des fibres de pâte.

8. Vêtement ou rideau selon la revendication 7, caractérisé en ce que les fibres courtes secondaires consistent en un mélange de 10 à 70 % en poids de fibres de pâte et de 30 à 90 % en poids de fibres synthétiques, d'une finesse allant de 0,11 à 3,33 dtex (0,1 à 3 den).

9. Vêtement ou rideau selon l'une des revendications 7 ou 8, caractérisé en ce que le substrat fibreux constitué par les courtes fibres primaires présente un poids de base de 20 g/m2, et un matériau lamifié, entouré par les fibres courtes secondaires, un poids de base de 25 à 100 g/m2.

10. Procédé pour la fabrication d'un non-tissé composite, sur un support, caractérisé par les étapes suivantes :
- traitement d'une couche fibreuse comportant les fibres courtes primaires, sur un support, avec des jets d'eau, de manière à obtenir un substrat de non-tissé à fibres désordonnées ;
- étirement transversal du substrat de 20 à 200 %, environ ;
- dépose de fibres courtes secondaires sous forme de couche ou de bouillie, sur le substrat transversalement étiré ;
- traitement du produit lamifié, composé du substrat transversalement étiré et des fibres courtes secondaires déposées sur celui-ci, avec des jets d'eau projetés du haut sur les fibres courtes secondaires, à une vitesse de 40 m/sec et plus, et à une pression d'environ 1,0 M Pa (10 kg/cm2), au moins les jets d'eau présentant entre eux un écartement plus petit que les marques laissées par les jets d'eau dans le substrat étiré au deuxième stade du procédé, et le support étant matérialisé par une plaque-support à maillage ou perforée ayant un pourcentage d'ajour de 2,5 à 50 %, de sorte que les fibres courtes secondaires s'entrelacent et produisent un feutrage dans les fibres du substrat transversalement étiré, en remplissant les vides entre les fibres du substrat.

11. Procédé selon la revendication 10, caractérisé en ce que les ajours utilisés au quatrième stade du procédé présentent un diamètre compris entre 0,05 et 0,25 mm, et un espacement mutuel plus petit, de préférence un espacement de moins de 1 mm, que les empreintes de jets produites dans le substrat transversalement étiré.
